# EUROPEAN PATENT SPECIFICATION

(11) **EP 4 359 139 B1**
(45) Date of publication and mention of the grant of the patent: **16.09.2026**
(21) Application number: 22765211.2
(22) Date of filing: 09.08.2022
(51) Int. Cl.: B02C 13/28, B02C 18/18, B02C 18/36, A01G 3/00, A01G 23/00, A01G 23/06

(54) **SYSTEM FOR A MULCHER**
SYSTEM FÜR EINEN MULCHER
SYSTÈME POUR UN BROYEUR

(30) Priority: 10.08.2021 IT 202100021689
(43) Date of publication of application: 01.05.2024
(73) Proprietor: Femac S.r.l., 06012 Città di Castello (PG) (IT)
(72) Inventor: FRATINI, Francesco, 06012 CITTA' DI CASTELLO (PG) (IT)
(74) Representative: Robba, Pierpaolo
(86) International application number: PCT/IB2022/057405
(87) International publication number: WO 2023/017408

(56) References cited:
- EP-A1- 1 993 346
- EP-A1- 2 848 312
- US-A- 5 464 164
- US-A1- 2017 106 375

## Description

### Technical Field

The present invention generally relates to a system for a mulcher, in particular for a forestry mulcher, comprising a plurality of mulching tools fixedly mounted on a rotor.

### Background Art

Mulching systems for mulchers are known, comprising a rotor rotating in an operating direction about an axis substantially parallel to the ground on which the mulcher operates. A plurality of tools for mulching materials, usually wooden materials, are mounted on the rotor in a fixed but generally removable manner. More particularly, with forestry mulchers, such tools are fixedly mounted on the rotor, unlike the case with agricultural mulchers, where the tools are rotatably mounted.

In the field of forestry mulchers, mulchers like the one described in document US2013277476A1 are known, on the rotors of which there are mounted, in a fixed manner, tools provided with blades having cutting edges arranged parallel to the rotation axis of the rotor, i.e., in other words, parallel to the ground on which the mulcher operates.

Document US2017106375A1 describes a system for a mulcher comprising a rotor and a plurality of tools mounted on the rotor. Each tool comprises a first blade having a first cutting edge extending substantially parallel to the rotation axis of the rotor and directed towards the operating direction of rotation of the rotor. Each tool also comprises a second blade having a second cutting edge. Said second cutting edge extends tangentially with respect to the cylindrical outer surface of the rotor. In addition, the second cutting edge is arranged to cut radially with respect to the rotational movement of the tool in the operating direction.

Documents US5464164A and EP2848312A1 both describe a system for a mulcher comprising a rotor and a plurality of tools mounted on the rotor. Each tool comprises only a first blade that extends substantially parallel to the rotation axis of the rotor and is directed towards the operating direction of rotation of the rotor.

The tools of the mulchers of the aforementioned type have the problem that their advancement through the material to be mulched encounters high resistance caused by the fact that such material hits against a portion of the tool themselves comprised between the blade and the rotor on which said tools are mounted.

The object of the present invention is to overcome the problems and limitations of prior art by providing a system for a forestry mulcher comprising tools having a configuration such that their advancement through the material to be mulched encounters less resistance.

This and other objects are achieved with the system for a forestry mulcher as claimed in the appended claims, which form an integral part of the description.

### Summary of Invention

The system for a mulcher according to the present invention comprises a rotor rotating about a rotation axis in an operating direction and having a preferably substantially cylindrical outer surface. The system further comprises a plurality of tools and connecting means configured to connect the tools to the rotor in a fixed, stable and lasting, but in any case removable, manner.

**In** the present description, the terms front and rear denote what is directed towards the operating direction of rotation of the rotor and what is directed towards the opposite direction, respectively, whereas the terms upper/above and lower/below denote what is farther from the outer surface of the rotor and what is closer to said surface, respectively.

Each tool of the system according to the invention comprises a first blade arranged in a front upper portion of the tool and having a cutting edge extending substantially parallel to the rotation axis of the rotor and is directed towards the aforesaid operating direction. In particular, the cutting edge is arranged so as to cut tangentially with respect to the rotational movement of the tool in the operating direction.

Each tool further comprises a second blade arranged in a front lower portion of the tool, below the first blade. Said second blade comprises two faces angled to each other, which join to form a second cutting edge extending transversely with respect to the outer surface of the rotor and being positioned centrally with respect to the first cutting edge of the first blade. The second cutting edge is also arranged so as to cut tangentially with respect to the rotational movement of the tool in the operating direction.

Advantageously, the second cutting edge of the second blade facilitates breaking of the material to be mulched, especially when such material is large-sized. Furthermore, the two faces of the second blade perform the function of inclined sliding surfaces, directing the mulched material laterally with respect to the tool; this allows limiting the contact between the tool and the material to be mulched, thereby reducing the resistance of the tool to the impact against the material and thus facilitating the advancement of the tool.

According to an aspect of the invention, the connecting means between rotor and tools comprise, for each tool, a corresponding tool holder having a base portion, configured to be fixedly mounted on the outer surface of the rotor, and a mounting portion, configured to allow the tool to be fixedly mounted on the tool holder. The mounting portion preferably has a front side, directed towards the operating direction, a rear side, directed towards a direction opposite to the operating direction, and an upper side, extending between the front side and the rear side.

Each tool comprises a rear lower projection configured to be inserted into a corresponding seat formed in the front side of the mounting portion of the tool holder. This seat has a back wall towards which a rear surface of the rear lower projection of the tool faces. Said rear lower projection of the tool is provided with at least one threaded coupling hole, preferably a blind hole, said hole being open towards the rear surface of the rear lower projection of the tool.

At least one coupling through-hole, corresponding to the at least one threaded coupling hole of the rear lower portion of the tool and coaxial therewith is provided in the mounting portion of the tool holder. The at least one coupling through-hole of the mounting portion extends from the back wall of the seat of the mounting portion to a rear surface of the rear side of the mounting portion.

The connecting means of the system further comprise at least one screw configured to be inserted into the at least one coupling through-hole of the tool holder and to engage in the corresponding at least one threaded coupling hole of the tool, so as to keep the tool secured to the tool holder.

According to an aspect of the invention, a gap is provided between the rear surface of the rear lower projection of the tool and the back wall of the seat of the tool holder, said gap allowing the at least one screw to generate a pulling action onto the tool, thus helping to make said tool integral in rotation with the respective tool holder.

According to a further aspect of the invention, each tool comprises a rear upper projection having a rear surface configured to abut against a shoulder formed in the upper side of the mounting portion of the tool holder. The shoulder helps to counter-balance the thrust exerted by the rear upper projection of the tool against the tool holder as a result of the impacts of the tool against the material to be mulched.

### Brief Description of Drawings

These and other features and advantages of the present invention will become evident from the following description of preferred embodiments given by way of non-limiting examples with reference to the annexed figures, in which elements denoted by same or similar reference numerals indicate elements having same or similar function and construction, and in which:
- Fig.1: represents a perspective view of a system for a mulcher according to an embodiment of the present invention;
- Fig.2: represents a perspective view of a tool of the system of Figure 1;
- Fig.3: represents a further perspective view of the tool of Figure 2;
- Fig.4: represents a sectional view of the tool of Figure 2;
- Fig.5: represents a perspective view of a tool according to a further embodiment of the invention;
- Fig.6: represents a further perspective view of the tool of Figure 5;
- Fig.7: represents a sectional view of the tool of Figure 5;
- Fig.8: represents a perspective view of a tool holder of the system of Figure 1;
- Fig.9: represents a further perspective view of the tool holder of Figure 8;
- Fig.10: represents a sectional view of the tool holder of Figure 8;
- Fig.11: represents a perspective view of the tool of Figure 2 mounted on the tool holder of Figure 8;
- Fig.12: represents a sectional view of the tool and tool holder of Figure 11;
- Fig.13: represents a perspective view of the tool of Figure 5 mounted on the tool holder of Figure 8;
- Fig.14: represents a sectional view of the tool and tool holder of Figure 13.

### Description of Embodiments

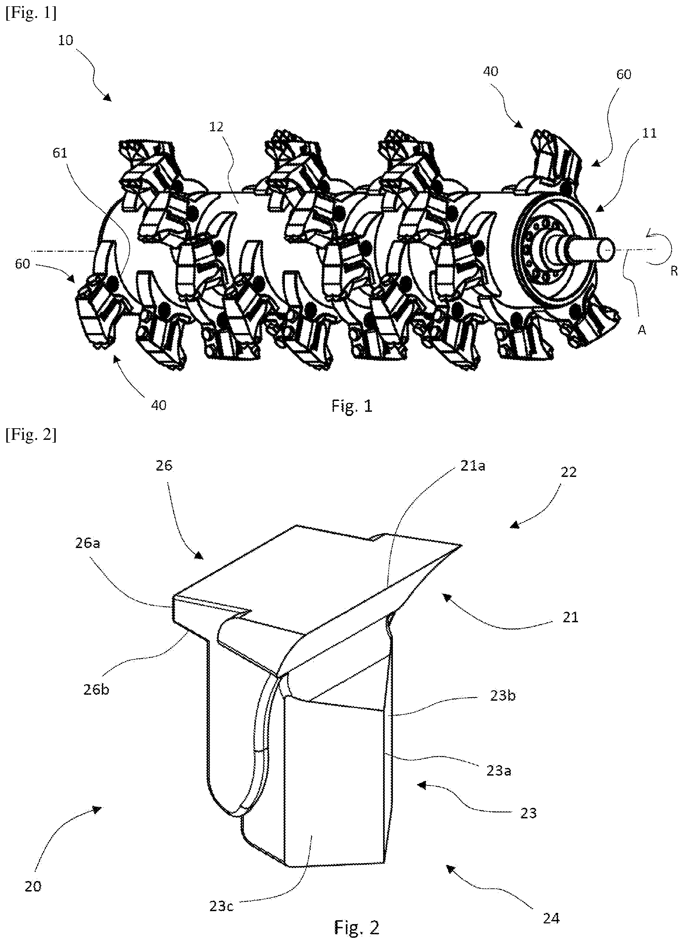

Referring to Figure 1, an embodiment of a system 10 for a mulcher, preferably a forestry mulcher, according to the invention is described below.

The system 10 comprises a rotor 11, connected to the mulcher (not shown) in a known manner and configured to rotate about a longitudinal rotation axis A in an operating direction (indicated by arrow R). During use of the mulcher, the rotation axis A of the rotor 11 is substantially parallel to the ground on which the mulcher operates, and is thus substantially horizontal.

The rotor 11 has an outer surface 12, substantially cylindrical, on which a plurality of tools 20 are fixedly mounted, as will be illustrated in the description below, said tools thus rotating in an integral manner with the rotor 11.

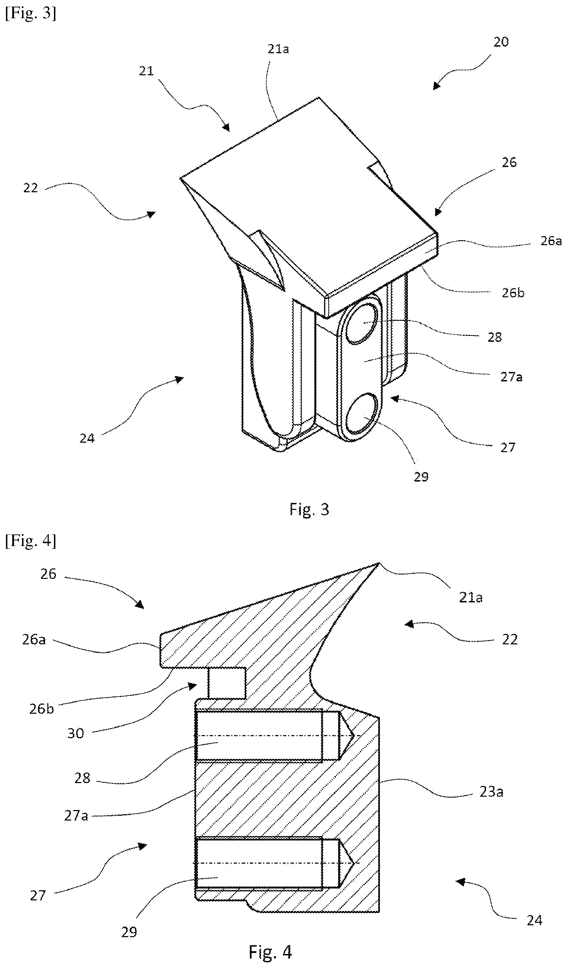

In the description below, the terms front and rear denote what is directed towards the operating direction of rotation of the rotor and what is directed towards the opposite direction, respectively, whereas the terms upper/above and lower/below denote what is farther from the outer surface of the rotor and what is closer to said surface, respectively. Referring to Figures 2-4, a tool 20 of the system 10 for a mulcher comprises a first blade 21 arranged in a front upper portion 22 of the tool 20 and having a first cutting edge 21a extending substantially parallelly to the rotation axis A of the rotor 11, i.e. substantially horizontally during use of the mulcher. The first cutting edge 21a is directed towards the operating direction so as to be able to cut tangentially with respect to the rotational movement of the tool integral in rotation with the rotor. The first cutting edge 21a is arranged in the foremost portion of the tool, so as to be the first to come into contact with the material, usually wooden material, to be mulched.

The tool 20 further comprises a second blade 23 arranged in a front lower portion 24 of the tool 20, below the first blade 21. The second blade 23 comprises two faces 23b, 23c angled to each other which join to form a cutting edge 23a extending transversely, more particularly in a substantially radial direction, with respect to the outer surface 12 of the rotor 11 and being directed towards the operating direction so as to be able to cut tangentially with respect to the rotational movement of the tool integral in rotation with the rotor. In addition, the second cutting edge 23a is positioned centrally with respect to the extension of the cutting edge 21a of the first blade 21.

Advantageously, the second cutting edge 23a of the second blade 23 facilitates breaking of the material to be mulched, especially when such material is large-sized. The two faces 23b, 23c of the second blade 23 perform the function of inclined sliding surfaces, directing the mulched material laterally with respect to the tool 20; this allows limiting the contact between the tool 20 and the material to be mulched, thereby reducing the resistance of the tool 20 to the impact against the material and thus facilitating the advancement of the tool. In the embodiment illustrated in Figures 2-4, the first blade 21 is made as a single piece with the rest of the tool 20 and is made, for example, of steel, more preferably a manganese-boron special steel, such as 27MnCrB5-2, subjected to hardening, tempering and sandblasting.

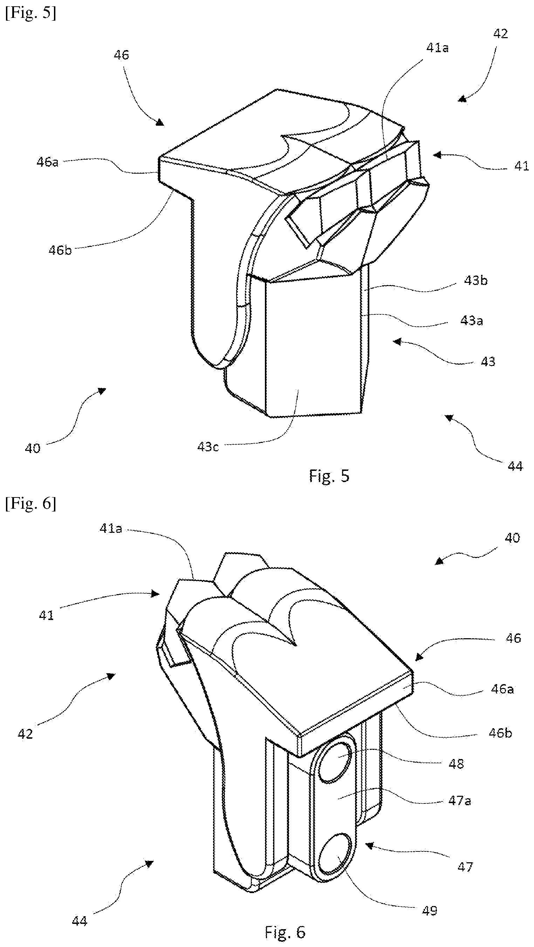

In a further embodiment of the invention, shown in Figures 5-7, a tool 40 comprises a first blade 41 configured to be mounted, in a removable manner, in a suitable blade-holding seat 45 provided in a front upper portion 42 of the tool 40. Generally, the first blade 41 is made of widia (or hard metal or tungsten carbide). The first blade 41 has a first cutting edge 41a extending substantially parallelly to the rotation axis A of the rotor (not shown) on which the tool is mounted, i.e. substantially in a horizontal direction during use of the mulcher. The first cutting edge 41a is directed towards the operating direction, so as to be able to cut tangentially with respect to the rotational movement of the tool integral in rotation with the rotor, and is arranged in the foremost portion of the tool, so as to be the first to come into contact with the material, usually wooden material, to be mulched.

The use of a first blade 41 made of widia makes the tool 40 more long-lasting than the tool 20. For this reason, the tool is usually employed for larger shrubs, up to about 25-30 cm, whereas the tool 20 is employed for smaller shrubs, up to about 20-25 cm.

Similarly to what has been described with reference to the tool 20, the tool 40 also comprises a second blade 43 arranged in a front lower portion 44 of the tool 40, below the first blade 41. The second blade 43 comprises two faces 43b, 43c angled to each other which join to form a cutting edge 43a extending transversely, more particularly in a substantially radial direction, with respect to the outer surface 12 of the rotor 11 and is directed towards the operating direction so as to be able to cut tangentially with respect to the rotational movement of the tool integral in rotation with the rotor. In addition, the second cutting edge 43a is positioned centrally with respect to the extension, in the horizontal direction, of the cutting edge 41a of the first blade 41.

The second blade 43 of the tool 40 allows obtaining the same advantages as those illustrated above with reference to the second blade 23 of the tool 20.

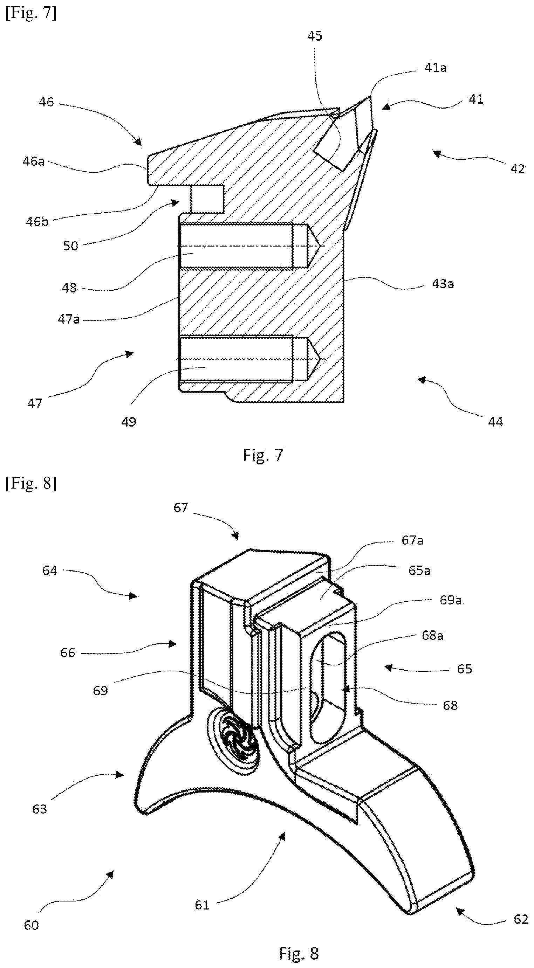

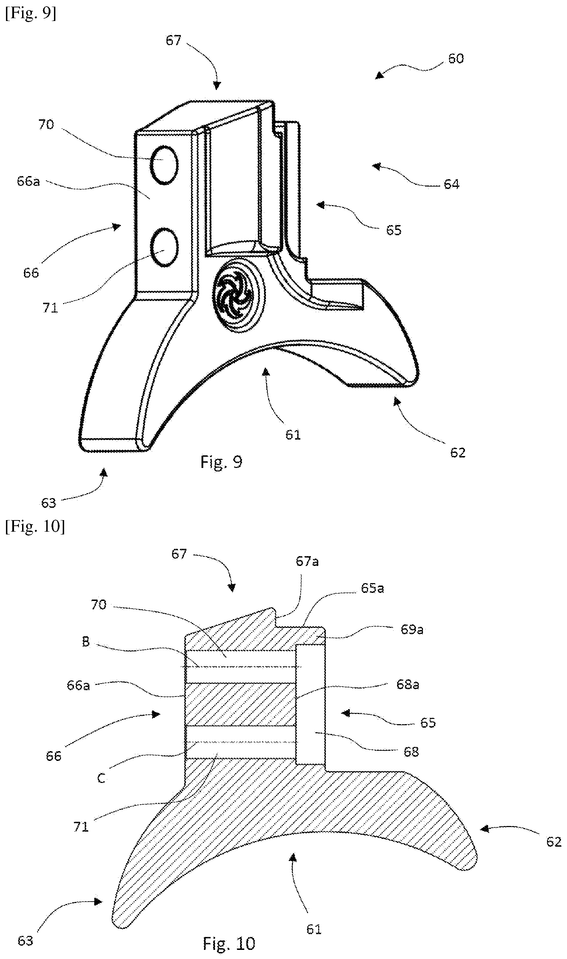

The system 10 for a mulcher comprises connecting means for fixedly connecting the tools 20 (or 40) to the rotor 11. The connecting means comprise, for each tool, a respective tool holder 60, shown in Figures 8-10.

Each tool holder 60 has a base portion 61, configured to be mounted, in a known manner, for example welded, on the outer surface 12 of the rotor 11, and a mounting portion 64, configured to allow the tool 20 (or 40) to be mounted on the tool holder 60.

The base portion 61 comprises a front part 62 extending towards the operating direction, and a rear part 63, extending in the opposite direction, so that the base portion 61 has a larger surface to be fixed, preferably welded, to the outer surface 12 of the rotor 11. The mounting portion 64 extends from and over the base portion 61, in a radial direction with respect to the rotor 11, and comprises a front side 65, a rear side 66 and an upper side 67 extending between said front side 65 and rear side 66.

Referring again to Figures 2-7, in order to allow coupling between the tool 20 (or 40) and the mounting portion 64 of the respective tool holder 60, the tool 20 (or 40) comprises a rear upper projection 26 (or 46) and a rear lower projection 27 (or 47), two coupling blind holes 28, 29 (or 48, 49) being provided in said rear lower projection, said holes being threaded and open towards a rear surface 27a (or 47a) of said rear lower projection 27 (or 47) and preferably extending parallel to each other.

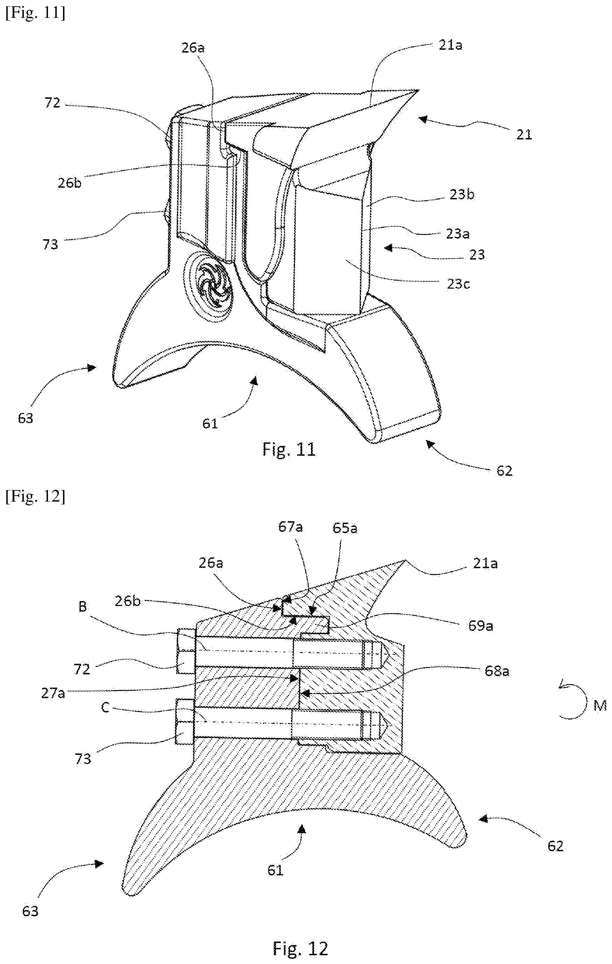

Turning again to Figures 8-10 and also referring to Figures 11-14, which show the tools 20 (or 40) coupled to the respective tool holders 60, the coupling between tool 20 (or 40) and tool holder 60 is described in more detail below.

The above-mentioned rear upper projection 26 (or 46) of the tool 20 (or 40) has a rear surface 26a (or 46a) configured to abut against a shoulder 67a provided in the upper side 67 of the mounting portion 64 of the tool holder 60. Said rear upper projection 26 (or 46) further comprises a lower surface 26b (or 46b) facing a corresponding upper surface 65a of the front side 65 of the mounting portion 64 of the tool holder 60.

The rear lower projection 27 (or 47) of the tool 20 (or 40) is configured to be inserted in a corresponding seat 68 formed in the front side 65 of the mounting portion 64 of the tool holder 60 and its rear surface 27a (or 47a) faces towards a back wall 68a of said seat 68. Said seat 68 of the mounting portion 64 is preferably surrounded by a projecting frame 69 and a portion 69a of said frame 69 is configured to engage into a recess 30 (or 50) formed between the rear upper projection 26 (or 46) and the rear lower projection 27 (or 47) of the tool 20 (or 40). Preferably, the portion 69a of the frame 69 is configured to engage into the recess 30 (or 50) with interference fit, so as to guarantee a connection, between tool 20 (or 40) and tool holder 60, more resistant to the outer stresses to which the tool is subjected during use of the mulcher.

Two coupling through-holes 70, 71 are further provided in the mounting portion 64 of the tool holder 60, said holes extending from the back wall 68a of the seat 68 of the mounting portion 64 of the tool holder 60 to a rear surface 66a of the rear side 66 of the mounting portion 64 of the tool holder 60; said rear surface 66a is preferably substantially perpendicular to the longitudinal axes B, C of the coupling through-holes 70, 71. Furthermore, each of said coupling through-holes 70, 71 is arranged coaxially with a respective hole of the pair of coupling blind holes 28, 29 provided in the tool 20 (or 40).

The connecting means further comprise two screws 72, 73. Each of said screws 72, 73 is adapted to be inserted into a respective hole of the pair of coupling through-holes 70, 71 and to engage in the corresponding threaded coupling blind hole 28, 29 so as to keep the tool 20 (or 40) secured to the tool holder 60.

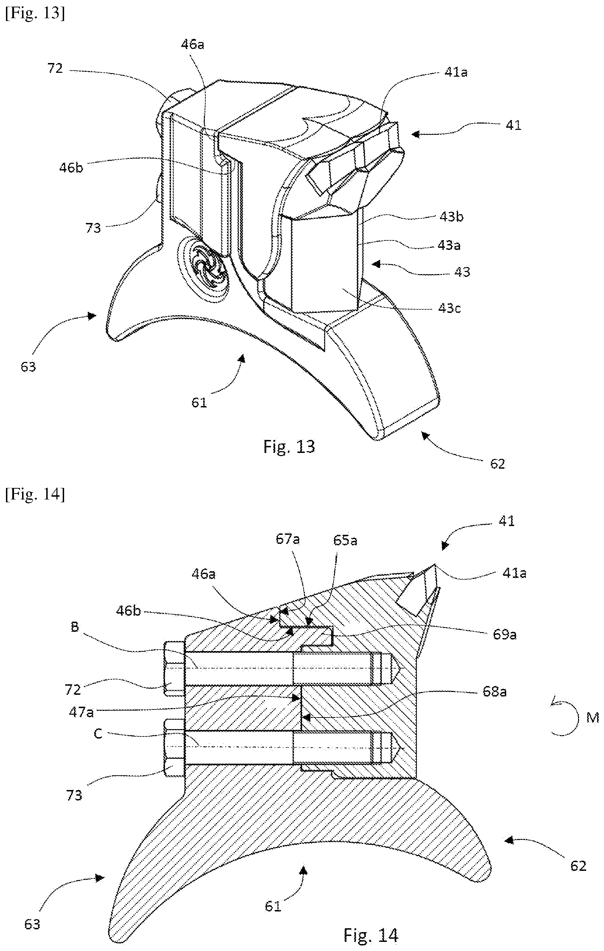

According to the invention, a gap, or clearance, 75 is provided between the rear surface 27a (or 47a) of the rear lower projection 27 (or 47) of the tool 20 (or 40) and the back wall 68a of the seat 68 of the tool holder 60. The presence of such gap 75 is of particular advantage when, during use of the mulcher, as a result of the impacts between tool 20 (or 40) and material to be mulched, a torque acts on the tool, said torque tending to rotate the tool 20 (or 40) about itself in a direction contrary to the rotation R of the rotor 11 of the system, i.e., with reference to Figures 12 and 14, counterclockwise, as shown by arrows M. Said torque tends to push the rear upper projection 26 (or 46) of the tool 20 (or 40) against the corresponding shoulder 67a of the upper side 67 of the tool holder 60 and move the rear lower projection 27 (or 47) of the tool 20 (or 40) away from the corresponding seat 68 of the tool holder 60. In this situation, the shoulder 67a of the tool holder 60 contributes to counterbalance the thrust exerted by the rear upper projection 26 (or 46) of the tool 20 (or 40), whereas the gap 75 between the rear surface 27a (or 47a) of the rear lower projection 27 (or 47) of the tool 20 (or 40) and the back wall 68a of the corresponding seat 68 of the tool holder 60 allows the screws 72, 73 to generate a pulling action onto the tool 20 (or 40), thereby contributing to make said tool integral in rotation with the tool holder 60.

The system for a mulcher as described and illustrated is susceptible to further variants and modifications falling within the same inventive principle.

## Claims

1. A system (10) for a mulcher comprising:
- a rotor (11) rotating about a rotation axis (A) in an operating direction (R) and having a substantially cylindrical outer surface (12),
- a plurality of tools (20; 40),
- connecting means for connecting the tools (20; 40) to the rotor (11), configured to fixedly connect the tools (20; 40) to the rotor (11),
wherein said connecting means comprise, for each tool (20; 40), a respective tool holder (60) having a base portion (61), configured to be fixedly mounted on said outer surface (12) of said rotor (11), and a mounting portion (64), configured to allow the tool (20; 40) to be fixedly mounted on the tool holder (60),
wherein each of said tools (20; 40) comprises a first blade (21; 41) arranged in a front upper portion (22; 42) of the tool and having a first cutting edge (21a; 41a) extending substantially parallel to the rotation axis (A) of the rotor (11) and directed towards said operating direction (R), wherein the first cutting edge (21a; 41a) is arranged so as to cut tangentially with respect to the rotational movement of the tool (20; 40) in the operating direction (R),
**characterized in that** each of said tools (20; 40) comprises a second blade (23; 43) arranged in a front lower portion (24; 44) of the tool and comprising two faces (23b, 23c; 43b, 43c) angled to each other which join to form a second cutting edge (23a; 43a), said second cutting edge (23a; 43a) extending transversely with respect to the outer surface (12) of the rotor (11) and being positioned centrally with respect to the first cutting edge (21a; 41a) of the first blade (21; 41), wherein the second cutting edge (23a; 43a) is arranged so as to cut tangentially with respect to the rotational movement of the tool (20; 40) in the operating direction (R).

2. The system (10) according to claim 1, wherein the second cutting edge (23a; 43a) extends substantially in a radial direction with respect to the substantially cylindrical outer surface (12) of the rotor (11).

3. The system (10) according to any one of the preceding claims, wherein said mounting portion (64) of the tool holder (60) has a front side (65), a rear side (66) and an upper side (67),
wherein each tool (20; 40) comprises a rear lower projection (27; 47) configured to be inserted into a corresponding seat (68) formed in the front side (65) of the mounting portion (64) of the tool holder (60) and having a back wall (68a) towards which a rear surface (27a; 47a) of the rear lower projection (27; 47) of the tool (20; 40) faces,
wherein said rear lower projection (27; 47) of the tool (20; 40) is provided with at least one threaded coupling hole (28, 29; 48, 49), open towards the rear surface (27a; 47a) of the rear lower projection (27; 47) of the tool (20; 40),
wherein at least one coupling through-hole (70, 71) corresponding to said at least one coupling hole (28, 29; 48, 49) of said rear lower projection (27; 47) of said tool (20; 40) is provided in said mounting portion (64) of said tool holder (60), said at least one coupling through-hole (70, 71) extending from the back wall (68a) of the seat (68) of the mounting portion (64) of the tool holder (60) to a rear surface (66a) of the rear side (66) of the mounting portion (64) of the tool holder (60) and being arranged coaxially with the corresponding at least one coupling hole (28, 29; 48, 49) of said rear lower projection (27; 47) of the tool (20; 40), and
wherein said connecting means comprise at least one screw (72, 73) configured to be inserted into the at least one coupling through-hole (70, 71) of the tool holder (60) and to engage in the corresponding at least one coupling hole (28, 29; 48, 49) of said rear lower projection (27; 47) of the tool (20; 40), so as to keep the tool (20; 40) secured to the tool holder (60).

4. The system (10) according to claim 3, wherein a gap (75) is provided between said rear surface (27a; 47a) of the rear lower projection (27; 47) of the tool (20; 40) and said back wall (68a) of the seat (68) of the tool holder (60).

5. The system (10) according to claim 3 or 4, wherein each tool (20; 40) comprises a rear upper projection (26; 46) having a rear surface (26a; 46a) configured to abut against a shoulder (67a) formed in the upper side (67) of the mounting portion (64) of the tool holder (60).

6. The system (10) according to any one of claims 3 to 5, wherein said seat (68) of the mounting portion (64) of the tool holder (60) is surrounded by a projecting frame (69), a portion (69a) of said frame (69) being configured to engage into a recess (30; 50) formed between the rear upper projection (26; 46) and the rear lower projection (27; 47) of the tool (20; 40).

7. The system (10) according to any one of the preceding claims, wherein the first blade (21) is made as a single piece with the tool (20).

8. The system according to any one of claims 1 to 6, wherein the first blade (41) is removably coupled to the tool (40).

## Patentansprüche

1. System (10) für ein Mulcher mit:
- einem Rotor (11), der sich in einer Betriebsrichtung (R) um eine Rotationsachse (A) dreht und eine im Wesentlichen zylindrische Außenfläche (12) hat,
- mehreren Werkzeugen (20; 40),
- Verbindungsmitteln zum Verbinden der Werkzeuge (20; 40) mit dem Rotor (11), die dafür ausgelegt sind, die Werkzeuge (20; 40) fest mit dem Rotor (11) zu verbinden,
wobei die Verbindungsmittel für jedes Werkzeug (20; 40) einen entsprechenden Werkzeughalter (60) aufweisen, der einen Basisabschnitt (61), der dafür ausgelegt ist, fest an der Außenfläche (12) des Rotors (11) montiert zu werden, und einen Montageabschnitt (64), der dafür ausgelegt ist, eine feste Montage des Werkzeugs (20; 40) an dem Werkzeughalter (60) zu ermöglichen, aufweist,
wobei jedes der Werkzeuge (20; 40) eine erste Klinge (21; 41) aufweist, die in einem vorderen oberen Abschnitt (22; 42) des Werkzeugs angeordnet ist und eine erste Schneidkante (21a; 41a) aufweist, die sich im Wesentlichen parallel zur Rotationsachse (A) des Rotors (11) erstreckt und in der Betriebsrichtung (R) ausgerichtet ist, wobei die erste Schneidkante (21a; 41a) so angeordnet ist, dass sie tangential in Bezug auf die Drehbewegung des Werkzeugs (20; 40) in der Betriebsrichtung (R) schneidet,
**dadurch gekennzeichnet, dass** jedes der Werkzeuge (20; 40) eine zweite Klinge (23; 43) aufweist, die in einem vorderen unteren Abschnitt (24; 44) des Werkzeugs angeordnet ist und zwei Seiten (23b, 23c; 43b, 43c) aufweist, die in einem Winkel zueinander angeordnet sind, um eine zweite Schneidkante (23a; 43b) zu bilden, wobei die zweite Schneidkante (23a; 43a) sich transversal in Bezug auf die Außenfläche (12) des Rotors (11) erstreckt und zentral in Bezug auf die erste Schneidkante (21a; 41a) der ersten Klinge (21; 41) angeordnet ist, wobei die zweite Schneidkante (23a; 43a) so angeordnet ist, dass sie in Bezug auf die Drehbewegung des Werkzeugs (20; 40) in der Betriebsrichtung (R) tangential schneidet.

2. System (10) nach Anspruch 1, wobei die zweite Schneidkante (23a; 43a) sich im Wesentlichen in radialer Richtung in Bezug auf die im Wesentlichen zylindrische Außerfläche (12) des Rotors (11) erstreckt.

3. System (10) nach einem der vorstehenden Ansprüche, wobei der Montageabschnitt (64) des Werkzeughalters (60) eine Vorderseite (65), eine Rückseite (66) und eine Oberseite (67) aufweist,
wobei jedes Werkzeugs (20; 40) einen hinteren unteren Vorsprung (27; 47) aufweist, der dafür ausgelegt ist, in einen entsprechenden Sitz (68) eingeführt zu werden, der in der Vorderseite (65) des Montageabschnitts (64) des Werkzeughalters (60) ausgebildet ist und eine hintere Wand (68a) aufweist, der eine Rückseite (27a; 47a) des hinteren unteren Vorsprungs (27; 47) des Werkzeugs (20; 40) zugewandt ist,
wobei der hintere untere Vorsprung (27; 47) des Werkzeugs (20; 40) mit wenigstens einem mit einem Gewinde versehenen Kopplungsloch (28, 29; 48, 49) versehen ist, das zu der Rückseite (27a; 47b) des hinteren unteren Vorsprungs (27; 47) des Werkzeugs (20; 40) hin offen ist,
wobei wenigstens ein durchgehendes Kopplungsloch (70, 71), das mit dem wenigstens einem Kopplungsloch (28, 29; 48, 49) des hinteren unteren Vorsprungs (27; 47) des Werkzeugs (20; 40) korrespondiert, in dem Montageabschnitt (64) des Werkzeughalters (60) vorgesehen ist, wobei das wenigstens eine durchgehende Kopplungsloch (70, 71) von der hinteren Wand (68a) des Sitzes (68) des Montageabschnitts (64) des Werkzeughalters (60) zu einer hinteren Fläche (66a) der Rückseite (66) des Montageabschnitts (64) des Werkzeughalters (60) verläuft und koaxial mit dem wenigstens einen korrespondierenden Kopplungsloch (28, 29; 48, 49) des hinteren unteren Vorsprungs (27; 47) des Werkzeugs (20; 40) angeordnet ist, und
wobei die Verbindungsmittel wenigstens eine Schraube (72, 73) enthalten, die dafür ausgelegt ist, in das wenigstens eine durchgehende Kopplungsloch (70, 71) des Werkzeughalters (60) eingeführt zu werden und in das entsprechende wenigstens eine Kopplungsloch (28, 29; 48, 49) des hinteren unteren Vorsprungs (27; 47) des Werkzeugs (20; 40) einzugreifen, so dass das Werkzeug (20; 40) an dem Werkzeughalter (60) befestigt ist.

4. System (10) nach Anspruch 3, wobei ein Spalt (75) zwischen der hinteren Fläche (27a; 47a) des hinteren unteren Vorsprungs (27; 47) des Werkzeugs (20; 40) und der Rückwand (68a) des Sitzes (68) des Werkzeughalters (60) vorgesehen ist.

5. System (10) Anspruch 3 oder 4, wobei jedes Werkzeug (20; 40) einen hinteren oberen Vorsprung (26; 46) aufweist, der eine hintere Fläche (26a; 46a) aufweist, die dafür ausgelegt ist, an einer Schulter (67a) anzuliegen, die in der Oberseite (67) des Montageabschnitts (64) des Werkzeughalters (60) gebildet ist.

6. System (10) nach einem der Ansprüche 3 bis 5, wobei der Sitz (68) des Montageabschnitts (64) des Werkzeughalters (60) von einem vorstehenden Rahmen (69) umgeben ist, wobei ein Abschnitt (69a) des Rahmens (69) dafür ausgelegt ist, in eine Aussparung (30; 50) einzugreifen, die zwischen dem hinteren oberen Vorsprung (26; 46) und dem hinteren unteren Vorsprung (27; 47) des Werkzeugs (20; 40) gebildet ist.

7. System (10) nach einem der vorstehenden Ansprüche, wobei die erste Klinge (21) einstückig mit dem Werkzeug (20) ausgebildet ist.

8. System nach einem der Ansprüche 1 bis 6, wobei die erste Klinge (41) abnehmbar an das Werkzeug (40) gekoppelt ist.

## Revendications

1. Système (10) pour un broyeur comprenant :
- un rotor (11) tournant autour d'un axe de rotation (A) dans une direction de fonctionnement (R) et présentant une surface extérieure (12) sensiblement cylindrique,
- une pluralité d'outils (20 ; 40),
- des moyens de connexion pour connecter les outils (20 ; 40) au rotor (11), configurés pour connecter de manière fixe les outils (20 ; 40) au rotor (11),
dans lequel lesdits moyens de connexion comprennent, pour chaque outil (20 ; 40), un porte-outil (60) respectif présentant une partie de base (61), configurée pour être montée de manière fixe sur ladite surface extérieure (12) dudit rotor (11), et une partie de montage (64), configurée pour permettre à l'outil (20 ; 40) d'être monté de manière fixe sur le porte-outil (60),
dans lequel chacun desdits outils (20 ; 40) comprend une première lame (21 ; 41) agencée dans une partie supérieure avant (22 ; 42) de l'outil et présentant une première arête de coupe (21a ; 41a) s'étendant sensiblement parallèlement à l'axe de rotation (A) du rotor (11) et dirigée vers ladite direction de fonctionnement (R), dans lequel la première arête de coupe (21a ; 41a) est agencée de manière à couper tangentiellement par rapport au mouvement de rotation de l'outil (20 ; 40) dans la direction de fonctionnement (R),
**caractérisé en ce que** chacun desdits outils (20 ; 40) comprend une seconde lame (23 ; 43) agencée dans une partie inférieure avant (24 ; 44) de l'outil et comprenant deux faces (23b, 23c ; 43b, 43c) inclinées l'une par rapport à l'autre qui se rejoignent pour former une seconde arête de coupe (23a ; 43a), ladite seconde arête de coupe (23a ; 43a) s'étendant transversalement par rapport à la surface extérieure (12) du rotor (11) et étant positionnée de manière centrée par rapport à la première arête de coupe (21a ; 41a) de la première lame (21 ; 41), dans lequel la seconde arête de coupe (23a ; 43a) est agencée de manière à couper tangentiellement par rapport au mouvement de rotation de l'outil (20 ; 40) dans la direction de fonctionnement (R).

2. Système (10) selon la revendication 1, dans lequel la seconde arête de coupe (23a ; 43a) s'étend sensiblement dans une direction radiale par rapport à la surface extérieure (12) sensiblement cylindrique du rotor (11).

3. Système (10) selon l'une quelconque des revendications précédentes, dans lequel ladite partie de montage (64) du porte-outil (60) présente un côté avant (65), un côté arrière (66) et un côté supérieur (67),
dans lequel chaque outil (20 ; 40) comprend une saillie inférieure arrière (27 ; 47) configurée pour être insérée dans un siège (68) correspondant formé dans le côté avant (65) de la partie de montage (64) du porte-outil (60) et présentant une paroi arrière (68a) vers laquelle une surface arrière (27a ; 47a) de la saillie inférieure arrière (27 ; 47) de l'outil (20 ; 40) fait face,
dans lequel ladite saillie inférieure arrière (27 ; 47) de l'outil (20 ; 40) est pourvue d'au moins un trou de couplage fileté (28, 29 ; 48, 49), ouvert vers la surface arrière (27a ; 47a) de la saillie inférieure arrière (27 ; 47) de l'outil (20 ; 40),
dans lequel au moins un trou traversant de couplage (70, 71) correspondant audit au moins un trou de couplage (28, 29 ; 48, 49) de ladite saillie inférieure arrière (27 ; 47) dudit outil (20 ; 40) est prévu dans ladite partie de montage (64) dudit porte-outil (60), ledit au moins un trou traversant de couplage (70, 71) s'étendant depuis la paroi arrière (68a) du siège (68) de la partie de montage (64) du porte-outil (60) jusqu'à une surface arrière (66a) du côté arrière (66) de la partie de montage (64) du porte-outil (60) et étant agencé de manière coaxiale avec le trou de couplage (28, 29 ; 48, 49) correspondant de ladite saillie inférieure arrière (27 ; 47) de l'outil (20 ; 40), et
dans lequel lesdits moyens de connexion comprennent au moins une vis (72, 73) configurée pour être insérée dans ledit au moins un trou traversant de couplage (70, 71) du porte-outil (60) et pour s'engager dans le trou de couplage (28, 29 ; 48, 49) correspondant de ladite saillie inférieure arrière (27 ; 47) de l'outil (20 ; 40), de manière à maintenir l'outil (20 ; 40) fixé au porte-outil (60).

4. Système (10) selon la revendication 3, dans lequel un jeu (75) est prévu entre ladite surface arrière (27a ; 47a) de la saillie inférieure arrière (27 ; 47) de l'outil (20 ; 40) et ladite paroi arrière (68a) du siège (68) du porte-outil (60).

5. Système (10) selon la revendication 3 ou 4, dans lequel chaque outil (20 ; 40) comprend une saillie supérieure arrière (26 ; 46) présentant une surface arrière (26a ; 46a) configurée pour venir en butée contre un épaulement (67a) formé dans le côté supérieur (67) de la partie de montage (64) du porte-outil (60).

6. Système (10) selon l'une quelconque des revendications 3 à 5, dans lequel ledit siège (68) de la partie de montage (64) du porte-outil (60) est entouré par un cadre saillant (69), une partie (69a) dudit cadre (69) étant configurée pour s'engager dans un évidement (30 ; 50) formé entre la saillie supérieure arrière (26 ; 46) et la saillie inférieure arrière (27 ; 47) de l'outil (20 ; 40).

7. Système (10) selon l'une quelconque des revendications précédentes, dans lequel la première lame (21) est réalisée d'un seul tenant avec l'outil (20).

8. Système selon l'une quelconque des revendications 1 à 6, dans lequel la première lame (41) est couplée de manière amovible à l'outil (40).
